Europäisches Patentamt

European Patent Office

Office européen des brevets

(11) Publication number: **0 311 196**
**B1**

# EUROPEAN PATENT SPECIFICATION

(45) Date of publication of the patent specification:
**12.12.90**

(51) Int. Cl.⁵: **A63C 1/30**

(21) Application number: **88202140.5**

(22) Date of filing: **29.09.88**

(54) **Skate and skate-blade.**

(30) Priority: **05.10.87 NL 8702365**

(43) Date of publication of application:
**12.04.89 Bulletin 89/15**

(45) Publication of the grant of the patent:
**12.12.90 Bulletin 90/50**

(84) Designated Contracting States:
**DE FR GB NL**

(56) References cited:
**EP-A- 0 151 335**
**DE-A- 1 807 419**
**DE-A- 3 616 572**
**FR-A- 2 586 430**
**US-A- 3 947 050**
**US-A- 4 131 288**
**US-A- 4 521 029**

(73) Proprietor: **Hoogovens Industrial Ceramics B.V., P.O. Box 10.000, NL-1970 CA Ijmuiden(NL)**

(72) Inventor: **Nierstrasz, Emile Frederik, Loengasterlaan 362, NL-8604 ZZ Sneek(NL)**
Inventor: **Van Konijnenburg, Jan Teun Dr. ir., Bleumerweg 10, NL-1901 MJ Castricum(NL)**

(74) Representative: **Wentzel, Hendrik Cornelis et al, Hoogovens Groep B.V. P.O. Box 10.000, NL-1970 CA IJmuiden(NL)**

## Description

The invention relates to a skate having a skate-blade and to a skate-blade. In this context a skate is an aid which can be affixed to a person's foot and by which he or she may propel himself or herself on natural or artificial ice as a sporting or leisure activity. Many types of skates are known such as racing skates (for competitive use), touring skates (for leisure trips), ice hockey skates, ice dancing skates etc.

In the Netherlands the so-called wooden skate has been known from ancient times. This skate comprises a tempered steel slider or skate-iron (more generally skate-blade) and a support often of beechwood in which the skate-blade is held and on which the foot can be supported when skating. The support is detachably fastened with webbing or straps to the foot which is shod or unshod.

Nowadays skates with fixed shoes are commonly used, that is to say a skate in which skate-blade and shoe remain fixed to one another. Racing and touring skates of this type often have tempered steel skate-blades held in a tubular support which is attached to the shoe by means of a pair of skate-cups and shoe-plates. In this skate the support, skate-cups and shoe-plates are made from aluminium, steel or titanium.

A disadvantage of known skates is that the skate-blade is subject to wear and tear in skating. As a result of this skates become blunt quite quickly and then have to be ground to resharpen them.

In US-A-4131288 it is proposed to form the ice-contacting portion of the skate-blade of tungsten carbide. A tungsten carbide component is brazed to a steel portion of the blade. The advantage of tungsten carbide is its hardness, which enables the blade to be used for longer without sharpening. A disadvantage of this skate-blade is the difficulty of achieving a strong and permanent bond between the tungsten carbide and the steel of the blade. This bond has poor resistance to mechanical shocks such as occur during skating. FR-A-2586430 suggests forming a coating of various metal oxides, carbides and nitrides on a skate-blade, to reduce wear and reduce the coefficient of friction.

The object of the present invention is to provide a skate which becomes blunt less quickly, resulting in the achievement of better performance over a longer time and greater distance and which is durable and is simple to manufacture.

The invention consists in that the skate-blade consists of a ceramic material or a fibre-reinforced ceramic material.

It has been found that it is in fact possible to use a skate blade wholly of such a material without fracture or other difficulty which might arise from the known qualities of ceramic materials. The ceramic material should be chosen from the high-quality dense industrial (engineering) ceramic materials now available. With such blades, it has also been found that, under otherwise equivalent conditions, the skate in accordance with the invention has a lower sliding resistance to skating. This can be explained as follows: when skating, a thin layer of water forms between the sliding surface of the skate-blade of the skate and the ice, as a result of the pressure of the skate on the ice and the dissipated skate-energy. Since ceramic materials have low thermal conductivity, with the skate-blade made from ceramic material in accordance with the invention, the heat-energy developed due to friction cannot be dissipated from the ice-contacting surface so well, which means that more water is formed resulting in lower sliding resistance.

In the invention, the skate-blade may consist of a ceramic material, selected from aluminium titanate, aluminium zirconate, sialon, silicon nitride, silicon carbide, zirconia and partially stabilized zirconia. Appropriate combinations of these materials, if available, can also be used. Partially stabilized zirconia is zirconia, to which is added an additive to increase ductility selected from yttrium oxide, magnesium oxide, calcium oxide, oxides of rare earths and combinations of these in a maximum total quantity of up to 8 mol percent. This material is less brittle and is particularly recommended if the type of use and the conditions when skating make it desirable to have a greater ductility for the skate-blade.

Skate-blades made from steel tend to distort plastically, thereby becoming permanently crooked.

In the invention, the skate-blade may consist of fibre-reinforced industrial ceramic material. In this case the ceramic material, which may be one of those listed above, is reinforced preferably with inorganic fibres, e.g. SiC whiskers, carbon fibres and combinations of these. This material is also not brittle and at the same time light in weight.

An advantage of the invention, is that, since the skate-blade consists of one piece of material, it can only distort elastically (according to Hooke's Law) and therefore returns to its original shape after bending.

Preferably, in a cross-section perpendicular to the longitudinal direction of the skate-blade, the thickness of the skate-blade increases with the height i.e. as the distance from the ice-contacting surface increases. This embodiment of the skate-blade is not so vulnerable to fracture. The skate-blade may consist of a plurality of components arranged in the longitudinal direction of the blade one behind the other, either touching each other or not.

This embodiment is inexpensive.

The skate-blade may project out of an elongate support in the direction perpendicular to the longitudinal direction of the support (downward direction) by a distance not exceeding 10 mm and preferably not exceeding 6 mm. In this way good longitudinal support against bending is obtained for the skate-blade.

The skate blade may be detachably held in the skate.

The invention extends to a skate-blade consisting of a ceramic material or a fibre-reinforced ceramic material.

An embodiment of the invention will be described by way of example with reference to the drawing, in which:

Figure 1 is a side-view of a skate in accordance with the invention; and

Figs. 2A and 2B show cross-sections of preferred embodiments of the skate-blade of a skate in accordance with the invention on the line II-II in Figure 1.

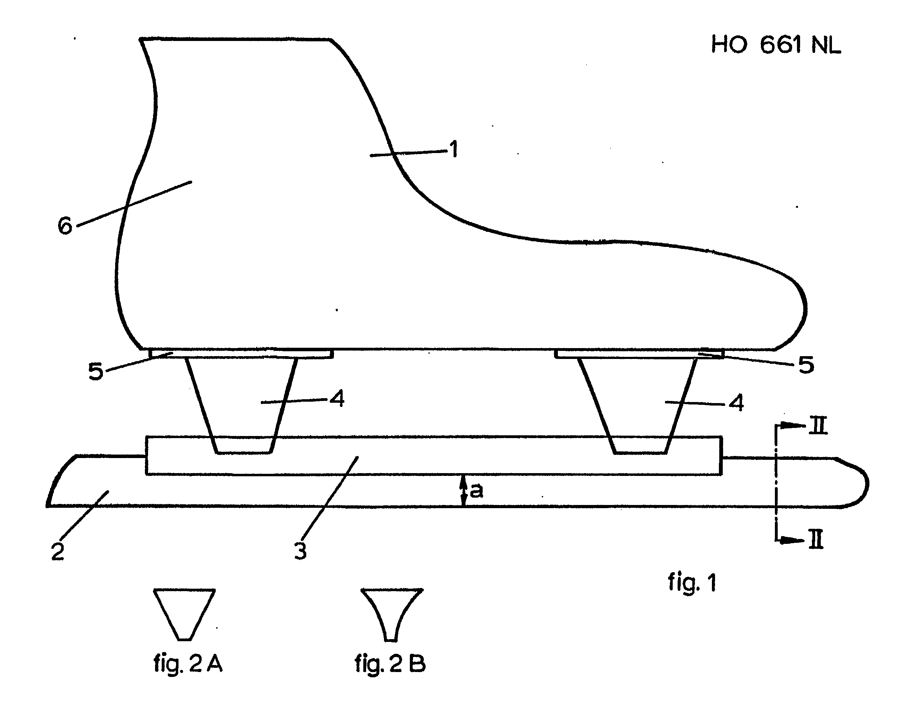

The skate 1 in accordance with the invention illustrated in Figure 1 has a skate-blade 2 and is otherwise designed conventionally for racing and touring skating use. The skate-blade 2 is held in a tube-shaped support 3, which is attached to a shoe 6 by means of a pair of skate-cups 4 and shoe-plates 5. The skate-blade 2 is wholly made of industrial ceramic material and projects downwardly out of the support 3 by a distance not exceeding 6 mm. Thus the elongate support 3 is designed to hold a portion of the blade 2 extending over more than half the blade length, which gives the blade support against bending forces.

The skate blade 3 may be planar, but figures 2A and 2B show that alternatively the skate-blade may have a thickness increasing in the height direction of the skate-blade, either with flat side surfaces (Figure 2A) or concave side surfaces (Figure 2B).

### Claims

1. Skate having a skate-blade (2), wherein the skate-blade (2) consists of a ceramic material or a fibre-reinforced ceramic material.

2. Skate in accordance with claim 1, wherein the ceramic material is one of aluminium titanate, aluminium zirconate, sialon, silicon nitride, silicon carbide, zirconia and partially stabilized zirconia or a combination of two or more of these.

3. Skate in accordance with claim 1 or claim 2, wherein the skate-blade (2) consists of fibre-reinforced ceramic material.

4. Skate in accordance with claim 3, wherein the ceramic material is reinforced with inorganic fibres which are SiC whiskers, carbon fibres or combination of these.

5. Skate in accordance with any one of the preceding claims, wherein in cross-section perpendicular to the longitudinal direction of the skate-blade, the thickness of the skate-blade (2) increases with increase in distance to the ice-contacting surface.

6. Skate in accordance with any one of the preceding claims, wherein the skate-blade consists of a plurality of components arranged in the longitudinal direction of the blade one behind the other.

7. Skate in accordance with any one of the preceding claims having at least one elongate support (3) for the skate-blade, the skate-blade (2) projecting out of the support (3) in the direction perpendicular to the longitudinal direction of the support not more than 10 mm.

8. Skate in accordance with claim 7 wherein the skate blade projects not more than 6 mm out of the support (3) in said direction.

9. A skate in accordance with any one of the preceding claims wherein the skate-blade (2) is detachably mounted on the skate.

10. A skate-blade which consists wholly of a ceramic material or a fibre-reinforced ceramic material.

### Patentansprüche

1. Schlittschuh mit einer Schlittschuh-Kufe (2), wobei die Schlittschuh-Kufe (2) aus einem keramischen Material oder einem faserverstärkten keramischen Material besteht.

2. Schlittschuh nach Anspruch 1, wobei das keramische Material eines von Aluminiumtitanat, Aluminiumzirkonat, Sialon, Siliciumnitrid, Siliciumcarbid, Zirkoniumdioxid und partiell stabilisiertem Zirkoniumdioxid oder eine Kombination von zwei oder mehreren davon ist.

3. Schlittschuh nach Anspruch 1 oder Anspruch 2, wobei die Schlittschuh-Kufe (2) aus faserverstärktem keramischen Material besteht.

4. Schlittschuh nach Anspruch 3, wobei das keramische Material mit anorganischen Fasern, die SiC-Whiskers, Kohlenstoffasern oder Kombinationen davon sind, verstärkt ist.

5. Schlittschuh nach irgendeinem der vorstehend genannten Ansprüche, wobei im Querschnitt senkrecht zur Längsrichtung der Schlittschuh-Kufe die Dicke der Schlittschuh-Kufe (2) mit zunehmendem Abstand von der mit dem Eis in Kontakt stehenden Oberfläche zunimmt.

6. Schlittschuh nach irgendeinem der vorstehend genannten Ansprüche, wobei die Schlittschuh-Kufe aus einer Vielzahl von Komponenten besteht, die in der Längsrichtung der Kufe eine hinter der anderen angeordnet sind.

7. Schlittschuh nach irgendeinem der vorstehend genannten Ansprüche, der wenigstens einen länglichen Träger (3) für die Schlittschuh-Kufe hat, wobei die Schlittschuh-Kufe (2) aus dem Träger (3) in der Richtung senkrecht zur Längsrichtung des Trägers nicht mehr als 10 mm herausragt.

8. Schlittschuh nach Anspruch 7, wobei die Schlittschuh-Kufe nicht mehr als 6 mm aus dem Träger (3) in besagter Richtung herausragt.

9. Schlittschuh nach irgendeinem der vorstehend genannten Ansprüche, wobei die Schlittschuh-Kufe abnehmbar an dem Schlittschuh montiert ist.

10. Schlittschuh-Kufe, die zur Gänze aus einem keramischen Material oder einem faserverstärkten keramischen Material besteht.

### Revendications

1. Patin comportant une lame (2) de patin, dans lequel la lame (2) de patin est constituée par un matériau céramique ou par un matériau céramique renforcé de fibres.

2. Patin selon la revendication 1, dans lequel le matériau céramique est soit du titanate d'aluminium, soit du zirconate d'aluminium, du sialon, du nitrure de silicium, du carbure de silicium, de la zircone et de la zircone partiellement stabilisée, ou une combinaison de deux ou de plusieurs de ces matériaux.

3. Patin selon la revendication 1 ou selon la revendication 2, dans lequel la lame (2) de patin est constituée par un matériau céramique renforcé de fibres.

4. Patin selon la revendication 3, dans lequel le matériau céramique est renforcé de fibres ou inorganiques qui sont des barbes de carbure de silicium (SiC), des fibres de carbone ou une combinaison de ces matériaux.

5. Patin selon l'une quelconque des revendications précédentes dans lequel, dans une section transversale perpendiculaire au sens longitudinal de la lame de patin, l'épaisseur de la lame (2) de patin s'accroît à mesure que s'accroît la distance par rapport à la surface de contact avec la glace.

6. Patin selon l'une quelconque des revendications précédentes, dans lequel la lame de patin consiste en une pluralité de composants disposés dans le sens longitudinal de la lame, l'un à la suite de l'autre.

7. Patin selon l'une quelconque des revendications précédentes comportant au moins un support (3) oblong destiné à la lame de patin, la lame (2) de patin faisant saillie au-delà du support (3) dans le sens perpendiculaire au sens longitudinal du support, sur une longueur ne dépassant pas 10 mm.

8. Patin selon la revendication 7, dans lequel la lame de patin ne fait pas saillie de plus de 6 mm au-delà du support (3) dans ledit sens.

9. Patin selon l'une quelconque des revendications précédentes, dans lequel la lame (2) de patin est montée sur le patin de façon détachable.

10. Lame de patin qui est constituée en totalité par un matériau céramique ou par un matériau céramique renforcé de fibres.

HO 661 NL

fig. 1

fig. 2 A

fig. 2 B

EP 0 311 196 B1